# EUROPEAN PATENT APPLICATION

(11) **EP 3 879 554 A1**
(43) Date of publication of application: **15.09.2021**
(21) Application number: 20162206.5
(22) Date of filing: 10.03.2020
(51) Int. Cl.: H01H 71/08, H01H 9/02, H01R 13/447

(54) **PROTECTION DEVICE FOR AN ELECTRICAL APPARATUS**

(71) Applicant: ABB Schweiz AG, 5400 Baden (CH)
(72) Inventor: Graf, Alexander, 68309 Mannhein (DE); Cirovic, Ivan, 68519 Viernheim (DE)
(74) Representative: Wesch, Arno

(57) **Abstract**

A protection device (3) for an electrical apparatus (4) to realize a degree of protection, comprising a front part (3a), which has a cutout (12), through which a partially insulated cable or bar (2) is insertable and a rear part (3b), from which the non-insulated part of the cable or bar (2) is extendable into the interior of the electrical apparatus (4), characterized in that a channel (7) passes through the front part (3a) and the rear part (3b), wherein within the channel (7) a stop (8) is arranged, on which the insulation jacket (1) of the insulated part of a cable or bar (2) may abut, achieves the object to disclose a protection device which reduces or prevents the migrating of foreign bodies through a gap between the protection device and an insulation jacket of a cable or bar.

## Description

The invention is related to a protection device for an electrical apparatus to realize a degree of protection, especially according to IP4x or IP40, comprising a front part, which has a cutout, through which a partially insulated cable or bar is insertable and a rear part, from which the non-insulated part of the cable or bar is extendable into the interior of the electrical apparatus.

Such a protection device, which usually is an electrical insulation of a cable or of a bar at a terminal or a housing of an electrical apparatus, is mostly made of rubber. The rubber often has a round or rectangular cutout. The flexible rubber pushes towards the cable or bar to create an IP protection which is a degree of protection.

A degree of protection reflects the suitability of an electrical apparatus to be used in a certain environment without creating a danger for persons, who use this apparatus. Degrees of protection are known under the classifications IP00 to IP69K. The degree of protection reflects the protection of active electrical parts, which lead current or voltage, against touch, against water or against the intrusion of debris, which are foreign bodies.

Some known protection devices have the drawback that they can be used only when the shape of an insulation jacket of a cable or bar is known. When the shape of the insulation jacket may have lots of shape variants, then a known protection device may not work properly anymore.

Especially, when there is a rectangular cutout and the shape or circumference of the insulation jacket is concave or convex, gaps between the protection device and the insulation jacket may occur.

The object of the invention therefore is to disclose a protection device which reduces or prevents the migrating of foreign bodies through a gap between the protection device and an insulation jacket of a cable or bar.

The object of the invention is achieved by means of the features of claim 1. According to this claim a channel passes through the front part and the rear part, wherein within the channel a stop is arranged, on which the insulation jacket of the insulated part of a cable or bar may abut.

According to the invention first it has been found that a protection device must provide a protection against foreign bodies. Further it has been found, that not a straight cutout has to be used to reach an IP class of protection, but to create a kind of labyrinth to prevent foreign particles, animals, test probes or similar bodies from entering the housing of an electrical apparatus and from touching life parts or from creating an arc. According to the invention the labyrinth comprises at least two areas. An inner area is used to create good insulation of the cable or bar, especially of a flex bar or of copper, and an outer area to create a labyrinth together with the insulation jacket of the cable or bar.

Advantageously, the channel has a first cross section in the front part and has a second cross section in the rear part, wherein the area of the first cross section is bigger compared to the area or the second cross section. A shape of an insulation jacket of a cable or bar, especially of a flex bar, may vary from bar to bar. By creating two areas having different sizes, a labyrinth has been embodied within the protection device. By using this labyrinth, a multiple insulation exists. A protection outside the protection device is given by the insulation jacket of the bar, especially a flex bar. Depending on the shape of the insulation jacket of a bar, it can occur that a body could penetratre inside the housing through a gap between the insulation jacket and the front part, in that case there is a further protection provided by the stop on which the insulation jacket abuts. The blank core of the cable or bar then is surrounded by the rear part having a cross section with a smaller area than the front part. Through this surrounding further gaps are prevented.

Further advantageously, the front part and the rear part internally are divided by a step or shoulder within the channel, which is the stop. A step or shoulder forms a defined edge, ridge or bead running around the bar, wherein the insulation jacket can abut without any gap on this edge, ridge or bead.

Advantageously, the length from an opening or the opening of the front part to the stop is in the range of 5 mm to 20 mm, preferably the length is 15 mm. Such a length is sufficient to reach a defined IP class. The general opening may be embodied in a wall of a cover which is arranged before the front part. The thickness of the wall increases the length in a preferred manner.

Further advantageously, the front part is connected with a plate which extends orthogonally or inclined relative to the direction of the extension of the channel. Such a plate allows assembling of the protection device easily in a housing or in a part of a housing of an electrical apparatus.

Advantageously, the front part and the rear part, and the plate as well, are made of a polymer, preferably are made of rubber. A polymer or rubber creates a very good electrical insulation and is a flexible material. Further such a protection device is compact, cheap and solid and accepts some tolerances and shapes of the insulation jacket or of the bar. It could be used rubber as well as plastic or another insulating material to generate or produce the protection device.

Further advantageously, the cross section of the cutout is rectangular and the cross sections of the channel are rectangular as well. Through this a flex bar having a core of copper which has a rectangular cross section as well may be inserted easily into the protection device.

An electrical apparatus, comprising a partially insulated cable or a bar advantageously comprises a protection device described in this specification, wherein the insulation jacket of the cable or bar abuts on the stop and wherein the cable or bar without an insulation jacket passes through the channel within the rear part and from there extends to a terminal or contact area. Such an apparatus is protected against migrating of foreign particles into its interior.

Advantageously, the protection device and/ or the front part is connected to a plate which is inserted with its side margins into nuts of rails in a part of the housing of the apparatus. Through this, the protection device can be arranged in the housing without any screws.

Further advantageously, the part is a removable cover, in which the nuts are designed and which cover is a removable part of the housing. Through this, the protection device is easily to assemble. The cover can be removed and the protection device may be connected with the cover. Then the whole assembly of cover and protection device may be fitted together with the rest of the housing.

Advantageously, a first outer insulation area is provided by the part of the cable or bar, which is surrounded by the insulation jacket, wherein a middle or second insulation area is provided by the front part and the part of the cable or bar, which is surrounded by the insulation jacket and is surrounded by the front part as well and wherein a third or inner insulation area is provided by the blank part of the cable or bar, which is not surrounded by the insulation jacket but which is surrounded by the rear part.

The protection device may be used in breakers or switchgears, preferably in low voltage switchgears.

In the drawings:
- Fig. 1: schematically shows a cross section of a rectangular cutout of a protection device and several shapes of insulation jackets of a flexbar,
- Fig. 2: schematically shows a cross section of a protection device in a housing of an electrical device, especially of a breaker, wherein the protection device has a rectangular cutout,
- Fig. 3: schematically shows a perspective view of a cross section of the arrangement of Fig. 2,
- Fig. 4: shows a perspective explosion view of the electrical apparatus of Fig. 2 and 3, wherein a cover comprising rails with nuts may be attached to three protection devices connected with plates, and
- Fig. 5: shows a cross section of a protection device in a contact.

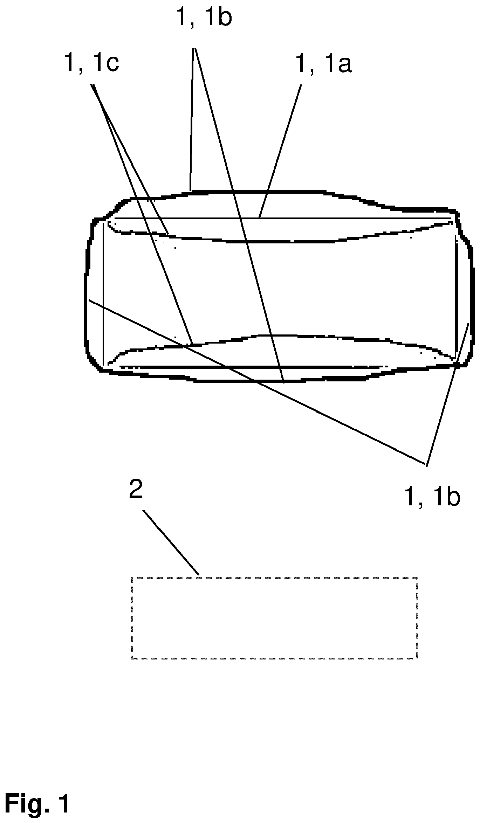

Fig. 1 in the upper part shows several shapes 1a, 1b, 1c, 1d of an insulation jacket 1 of a bar 2, which is shown in the lower part of Fig. 1.

The bar 2 is a flexbar, having a cuboid-shaped core of copper. Shape 1a is the ideal shape having a rectangular cross section.

Shape 1b has convex curvatures and shape 1c has concave curvatures. Those aberrations from the ideal shape lead to gaps between a rectangular cutout of a protection device and the insulation jacket.

A foreign body of a size of 1 mm should not penetrate such a gap.

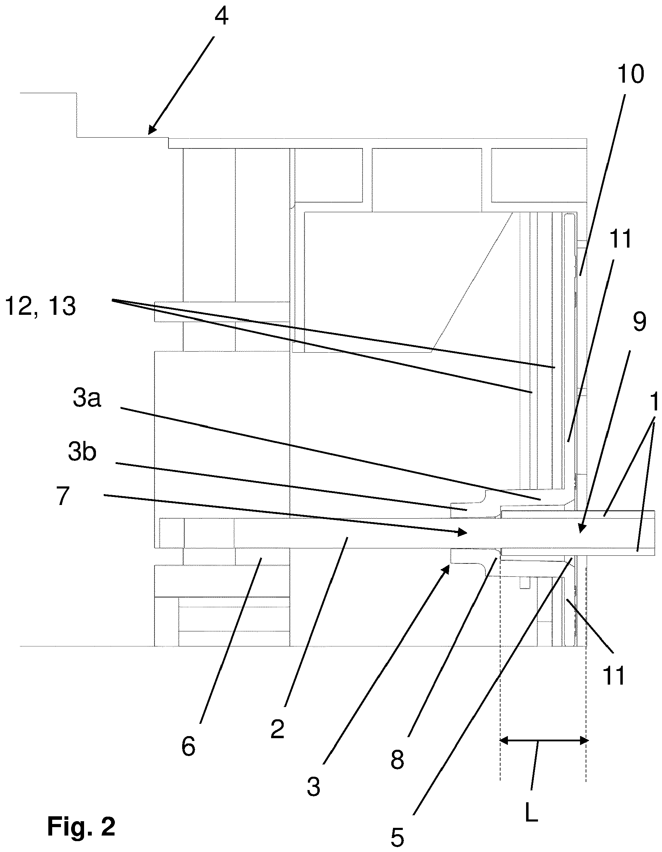

Fig. 2 shows an IP 40 protection device 3 for an electrical apparatus 4 to realize a degree of protection, comprising a front part 3a, which has a cutout 5, through which a partially insulated bar 2 is insertable and a rear part 3b, from which the non-insulated part of the bar 2 is extendable into the interior of the electrical apparatus 4 to get in an electrical contact connection at a terminal 6.

A channel 7 passes through the front part 3a and the rear part 3b, wherein within the channel 7 a stop 8 is arranged, on which the insulation jacket 1 of the insulated part of the bar 2 abuts.

This stop 8 together with the front part 3a and the rear part 3b create a labyrinth designed by the front part 3a and the rear part 3b housing this stop 8. This labyrinth prevents a foreign body from penetrating into the interior of the electrical apparatus. The shape of the labyrinth is embodied in such a way that a degree of protection does not depend on the shape of an insulation jacket 1 of any bar 2 connected to the housing 14 of an electrical apparatus 4.

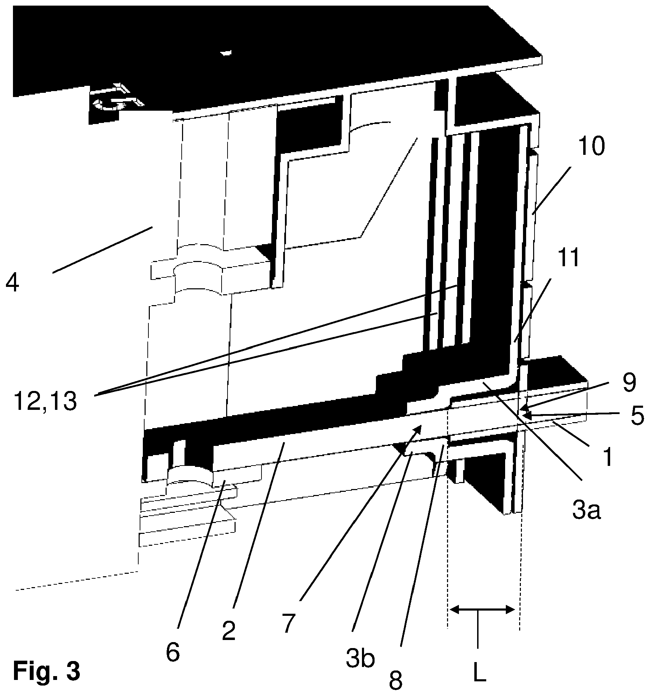

Fig. 3 shows best, that the channel 7 has a first cross section in the front part 3a and has a second cross section in the rear part 3b, wherein the area of the first cross section is bigger compared to the area or the second cross section. The front part 3a and the rear part 3b internally are divided by a step or shoulder within the channel 7, which is the stop 8.

Fig. 2 and 3 show that the length L from an opening 9 to the stop 8 is 15 mm. The opening 9 is in a wall 10 which is arranged before the cutout 5 of the front part 3a.

Fig. 2 and 3 show, that the front part 3a is connected with a plate 11 which extends orthogonally relative to the direction of the extension of the channel 7. The front part 3a, the rear part 3b and the plate 11 are made of rubber and are integrally formed as one body.

The cross section of the cutout 5 is rectangular and the cross sections of the channel 7 are rectangular as well.

Fig. 2, 3 and 4 show an electrical apparatus 4, which is a breaker, comprising a partially insulated bar 2 and a protection device 3, wherein the insulation jacket 1 of the bar 2 abuts on the stop 8 and wherein the bar 2 without an insulation jacket 1 after the stop 8 passes through the channel 7 within the rear part 3b and from there extends to a terminal 6 or contact area.

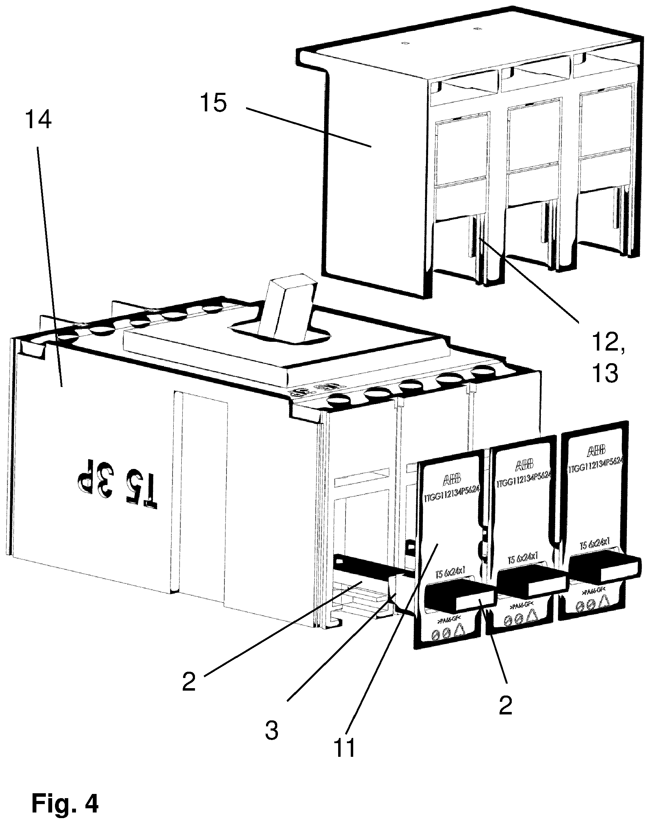

Fig. 4 shows best, that the protection device 3, especially the front part 3a, is connected to a plate 11, which is inserted with its side margins into nuts 13 of rails 12 in a part of the housing 14 of the apparatus 4.

The part is a removable cover 15, in which the nuts 13 are designed and which cover 15 is a removable part of a housing 14.

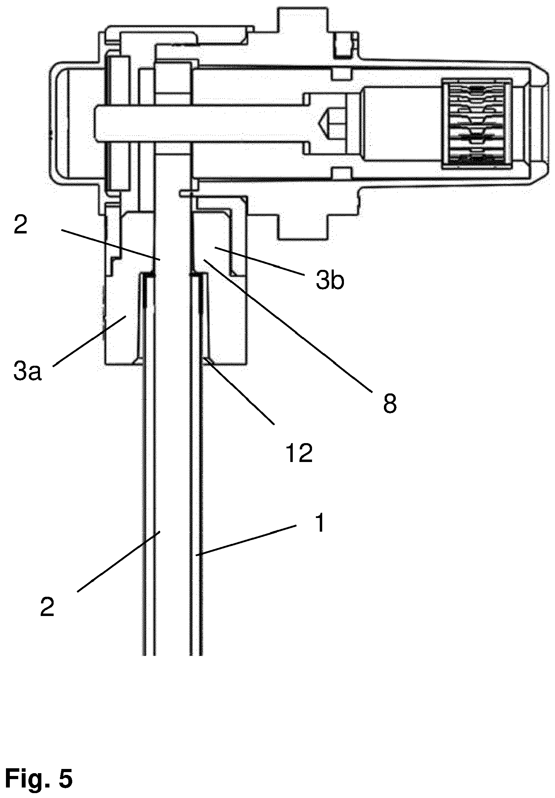

Fig. 5 shows a further application of the protection device 3 in a contact.

All embodiments show, that a first or outer insulation area is provided by the part of the cable or bar 2, which is surrounded by the insulation jacket 1, wherein a second or middle insulation area is provided by the front part 3a and the part of the cable or bar 2, which is surrounded by the insulation jacket 1 and is surrounded by the front part 3a as well and wherein a third or inner insulation area is provided by the blank part or core of the cable or bar 2, which is not surrounded by the insulation jacket 1 but which is surrounded by the rear part 3b. The blank part of the bar 2 is the copper core of the bar 2. The bar 2 is a flexbar, which is so thin, that it may be bended or deformed in an easy manner or by its own weight, when being clamped at one end and the other end being free.

### Reference numbers

| | |
|---|---|
| 1 | Insulation jacket of 2 |
| 1a, b, c | Shapes of 1 |
| 2 | Bar |
| 3 | Protection device |
| 3a | Front part of 3 |
| 3b | Rear part of 3 |
| 4 | Electrical apparatus |
| 5 | Cutout |
| 6 | Terminal of 4 |
| 7 | Channel |
| 8 | Stop |
| 9 | Opening of 10 |
| 10 | Wall |
| 11 | Plate of 3, 3a |
| 12 | Rail of 15 |
| 13 | Nut of 12 |
| 14 | Housing of 4 |
| 15 | Cover |

## Claims

1. Protection device (3) for an electrical apparatus (4) to realize a degree of protection, comprising a front part (3a), which has a cutout (12), through which a partially insulated cable or bar (2) is insertable and a rear part (3b), from which the non-insulated part of the cable or bar (2) is extendable into the interior of the electrical apparatus (4),
**characterized in that** a channel (7) passes through the front part (3a) and the rear part (3b), wherein within the channel (7) a stop (8) is arranged, on which the insulation jacket (1) of the insulated part of a cable or bar (2) may abut.

2. Protection device according to claim 1, **characterized in that** the channel (7) has a first cross section in the front part (3a) and has a second cross section in the rear part (3b), wherein the area of the first cross section is bigger compared to the area or the second cross section.

3. Protection device according to claim 1 or 2, **characterized in that** the front part (3a) and the rear part (3b) are divided by a step or shoulder within the channel, which is the stop (8).

4. Protection device according to one of the preceding claims, **characterized in that** the length (L) from an opening (9) or an opening of the front part (3a) to the stop (8) is in the range of 5 mm to 20 mm, preferably the length is 15 mm.

5. Protection device according to one of the preceding claims, **characterized in that** the front part (3a) is connected with a plate (11) which extends orthogonally or inclined relative to the direction of the extension of the channel (7).

6. Protection device according to one of the preceding claims, **characterized in that** the front part (3a) and the rear part (3b) are made of a polymer, preferably are made of rubber.

7. Protection device according to one of the preceding claims, **characterized in that** the cross section of the cutout (12) is rectangular and that the cross sections of the channel (7) are rectangular.

8. Electrical apparatus (4), comprising a partially insulated cable or a bar (2) and a protection device (3) according to one of the preceding claims, wherein the insulation jacket (1) of the cable or bar (2) abuts on the stop (8) and wherein the cable or bar (2) without an insulation jacket (1) passes through the channel (7) within the rear part (3b) and from there extends to a terminal (6) or contact area.

9. Apparatus according to claim 8, **characterized in that** the protection device (3) and/ or the front part (3a) is connected to a plate (11) which is inserted with its side margins into nuts (13) of rails (12) in a part of the housing (14) of the apparatus (4).

10. Apparatus according to claims 9, **characterized in that** the part is a removable cover (15), in which the nuts (13) are designed and which cover (15) is a removable part of the housing (14).

11. Apparatus according to one of the claims 8 to 10, **characterized in that** a first insulation area is provided by the part of the cable or bar (2), which is surrounded by the insulation jacket (1), wherein a second insulation area is provided by the front part (3a) and the part of the cable or bar (2), which is surrounded by the insulation jacket (1) and is surrounded by the front part (3a) and wherein a third insulation area is provided by the blank part of the cable or bar (2), which is not surrounded by the insulation jacket (1) but which is surrounded by the rear part (3b).

12. Apparatus according to one of the claims 8 to 11, being part of a switchgear.
